(19) **Europäisches Patentamt**

**European Patent Office**

**Office européen des brevets**

(11) **EP 0 676 741 B1**

(12) **EUROPEAN PATENT SPECIFICATION**

(45) Date of publication and mention
of the grant of the patent:
**25.07.2001 Bulletin 2001/30**

(51) Int Cl.⁷: $G10H\ 1/00$, G10H 1/38,
G10H 1/44

(21) Application number: **95104957.6**

(22) Date of filing: **03.04.1995**

(54) **Reproducing apparatus for karaoke use**

Vorrichtung zur Wiedergabe für Karaokebenutzung

Dispositif de reproduction de karaoke

(84) Designated Contracting States:
**DE ES FR GB IT**

(30) Priority: **06.04.1994 JP 9314194**

(43) Date of publication of application:
**11.10.1995 Bulletin 1995/41**

(73) Proprietor: **SONY CORPORATION
Tokyo 141 (JP)**

(72) Inventor: **Nakamura, Junichi,
c/o Sony Corporation
Shinagawa-ku, Tokyo (JP)**

(74) Representative: **Melzer, Wolfgang, Dipl.-Ing. et al
Patentanwälte
Mitscherlich & Partner,
Sonnenstrasse 33
80331 München (DE)**

(56) References cited:
**EP-A- 0 282 458       WO-A-88/05200
GB-A- 2 013 386       JP-A- 4 042 296
US-A- 4 915 001**

**Description**

The present invention relates to a reproducing apparatus for a medium for karaoke use.

From JP-A-4 042 296 (=US 5,446,238) and from GB-A-2013386 are known voice processors for converting input voice signals to come in consonance with a chord information from an electronic music instrument. From EP-A2-0 282 458 is known an electronic instrument for automatically and simultaneously reproducing tones with preset frequency intervals (harmonies) based on tables.

WO 88/05200 discloses an electronic entertainment device wherein audio signals receiver over a microphone and audio signals relating to background music (which may be prerecorded) are mixed such that the first mentioned audio signals are adapted to data associated to the last mentioned audio signals such that those a pleasant in the context.

With karaoke apparatus, additional reverberation processing or frequency characteristic compensation is carried out on the singers voice i.e. the audio signal of singers, in order to enhance the results of the singers' singing.

This processing and correction is widely used as good results can be obtained regardless of the song or lyrics etc. which are sung.

However, as echo processing and frequency characteristic correction are widely used and common, marked effects cannot be obtained.

It is therefore an object of the present invention to provide a reproducing apparatus for a medium which resolves the above-mentioned problem.

The invention is set forth in the independent claims. Further features are set forth in the dependent claims.

Embodiments of the invention are described in detail with respect to the accompanying drawings.

FIG. 1 is a block diagram relating to a disc reproducing apparatus of a first embodiment of the present invention;

FIGS. 2A and 2B are explanatory diagrams for describing the disc track format of a recording medium used for the present invention;

FIG. 3 is a view showing an example of a data table;

FIGS. 4A and 4B are views for describing musical interval difference;

FIG. 5 is a view showing an example of a data format of a disc taken as a recording medium for a second embodiment of the present invention; and

FIGS. 6A and 6B are views showing a data contents example.

DESCRIPTION OF THE INVENTION

(First Embodiment)

The following is a detailed description, with reference to the drawings, of a reproducing apparatus for a recording medium for a first embodiment of the present invention. In the example disclosed in the following, a description is given taking as an example a case where the recording medium is a disc-shaped recording medium.

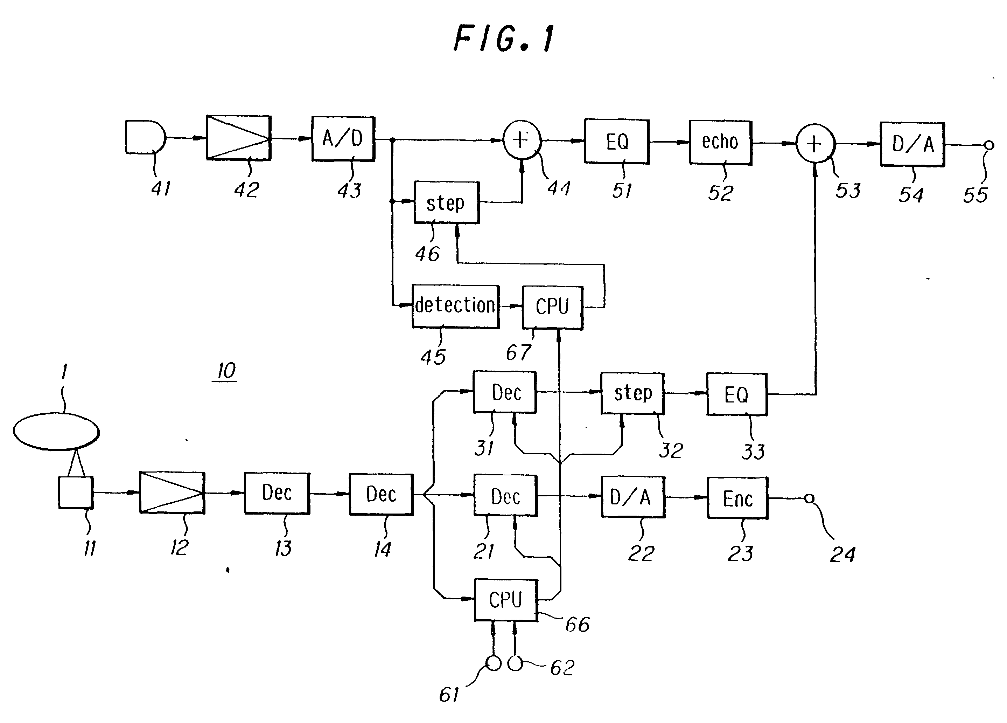

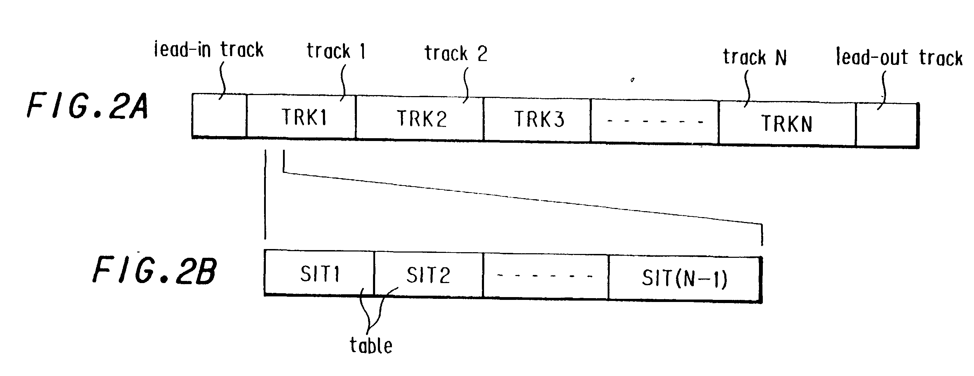

In FIG. 1, a reference numeral 1 denotes a video CD taken as a disc recording medium for karaoke use and a reference numeral 10 denotes it's reproducing apparatus. The disc 1 is rotatably driven at a constant linear velocity by a rotational driving device not shown in the drawings. As shown in FIG. 2A, the disc 1 has a lead-in track at it's head portion, followed by N ($N \leq 99$) data tracks TRK1 to TRKN and a lead-out track. Each of the various types of information and data relating to the disc i.e. the video CD contents are recorded on the first track TRK1 of the tracks TRK1 to TRKN. It is also recorded on track TRK1 that the disc 1 is a video CD for Karaoke use.

An (N-1) song Karaoke data table is prepared at this first track TRK1, as shown in FIG. 2B. This table is referred to as the "sequence item table" and is constructed independently for every one song part. i.e. (N-1) sequence item tables SIT1 to SIT(N-1) corresponding to each karaoke song are provided.

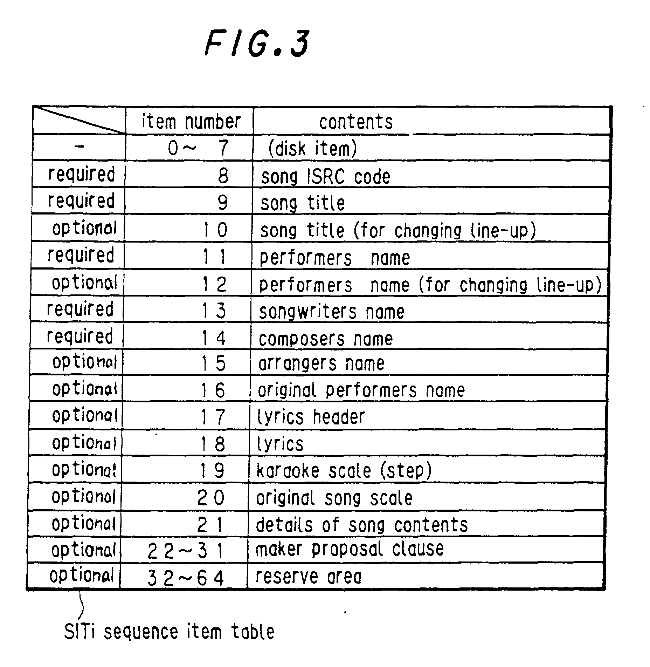

FIG. 3 shows a structure of an SITi (i = 1 to (N-1)) table with 64 clause sections. There are required and optional clauses but the contents of the clause sections can vary in length. For example, clause number 9 is taken as a song title section and it's contents is data displaying the song title as text data. Clause number 18 is taken to be the lyric clause section, with the lyrics being stored in text data form.

Clause number 19 is prepared with data showing the scales (musical intervals) C, C# and Cm. The clause sections 22 to 31 of clause numbers 22 to 31 are left open for the manufacturer or the maker which manufactures recording media for karaoke use.

The data of the video signal and the data of the audio signal of the karaoke for the first program is recorded in data compressed form on a second track TRK2. In this case, the data of the video signal, for example, a luminance signal and two color difference signals are data-compressed using an MPEG (Moving Picture Expert Coding Group) method and then recorded. With the data of the audio signal also, left and right channel signals are put into single blocks on every prescribed number of samples and each of these blocks are then data compressed and recorded.

These video and audio signals are recorded in sector units but the sequence and number of video signal sectors and audio signal sectors i.e. the ration between the number of audio signal sectors and video signal sectors in not fixed. Because of this, data showing whether the signal recorded in a sector is a video signal or an audio signal is recorded together with other information at the head portion of each sector.

The karaoke video signals and audio signals for the second to (N-1)th songs are recorded in data compressed states on the third to Nth tracks TRK3 to TRKN, respectively.

At the reproducing apparatus 10, a signal recorded on the disc 1 is read out by an optical pick-up 11. The output signal from the optical pickup 11 is then supplied to a playback decoder 13 through a playback amplifier 12, where processes such as EFM demodulation and error correction are carried out. The signal processed by the playback decoder 13 is supplied to a CD-ROM decoder 14 where selector unit decode processing is carried out and each signal is outputted.

The data for the first track TRK1 of the output signals from the decoder 14 is taken up by a system controller 66 constructed from a microcomputer and is hereafter used by the system controller 66 for reproduction control.

The data of the video signal of the output signals from the decoder 14 are inputted to the decoder 21 and decoded into video signals i.e. a luminance signal and two chrominance signals. This decoded video signal is then D/A converted into an analog signal at the D/A converter 22. This D/A converted video signal is supplied to an NTSC encoder 23, encoded into an NTSC color composite video signal and outputted to a terminal 24.

The data of the audio signal of the output signals from the decoder 14 is inputted to an MPEG decoder 31 and decoded into an audio signal, i.e. left and right channel audio signals relating to musical accompaniment for karaoke use. This decoded audio signal is supplied to a musical interval converting circuit 32.

This converting circuit 32 makes it easy to sing by adjusting the musical interval of the provided audio signals into an audio band in which the singer can sing. A musical interval inputting unit 61 is therefore provided at the reproducing apparatus 10 in order to achieve this. When data designating the musical interval is inputted from this inputting unit 61, the inputted data is supplied to the converting circuit 32 through the system controller 66. This means that the musical interval of the audio signal being provided to the converting circuit 32 is transposed to the musical interval designated by the data inputted from the inputting unit 61.

Further, an operator 62 for adjusting song speed is provided at the reproducing apparatus 10. The output of this operator 62 is supplied to the system controller 66. The rotational speed of the disc 1 and the playback speed of the video signal and audio signal controlled by the decoder circuits 21 and 31 are then changed in accordance with the output of the operator 62. Variations in a signal occurring due to changes in this speed are then corrected.

The audio signal from the converting circuit 32 is supplied to a mixer 53 through an equalizer 33. In this case, the equalizer 33, for example, divides the karaoke audio signal into a number of bands and corrects the level for each band.

An audio signal corresponding to the singers voice is supplied to an A/D converter 43 through an amplifier 42 and is A/D converted. This A/D converted audio signal is supplied to the aforementioned mixer 53 via an equalizer 51 and before being supplied to the mixer 53, through an echo processor 52. In this case, the equalizer 51 divides the signal corresponding to the singers voice up into a plurality of bands and corrects the level for each band. The echo processor 52 adds the desired reverberation to the audio signal corresponding to the singers voice provided.

The audio signal read and reproduced from the disc 1 and the audio signal outputted from the microphone 41 are mixed at the mixer 53 i.e. an audio signal which is the singers voice with karaoke musical accompaniment is obtained. The audio signal outputted from the mixer 53 is supplied to the D/A converter 54, D/A converted, and outputted to the terminal 55.

In the case of this invention, a harmony audio signal is formed from the audio signal outputted from the microphone 41 and this is added to the audio signal inputted through the microphone 41.

Namely, the audio signal from the microphone 41 which is converted to a digital signal by the A/D converter 43 is supplied to a musical interval detection circuit 45 and the musical interval of the audio signal from the microphone 41 is detected. The detection signal which designed this musical interval is then supplied to a musical interval controller 67 composed of a microcomputer (CPU). The interval controller 67 generates musical interval data displaying a musical interval related to a chord with respect to a musical interval of an audio signal from a microphone 41 detected by the detection circuit 45.

In this case, according to chord theory, the chord relationship is separated with respect to the musical interval of the audio signal from the microphone 41, i.e. the voice musical interval by +/- 3 tones or +/- 5 tones. However, according to experiment, if audio of a musical interval of +3 or +5 tones i.e. harmony is added, the singers musical interval tends to be drawn-into the musical interval of that which is added. Also, for a -5 tone musical interval which the musical interval of the singers voice is low, the harmony becomes too low and some of the harmonizing effect is lost.

So, in the embodiments of the present invention, musical interval data showing a musical interval which is three tones down from the musical interval of the singers voice detected by the detection circuit 45 is generated at the interval controller 67.

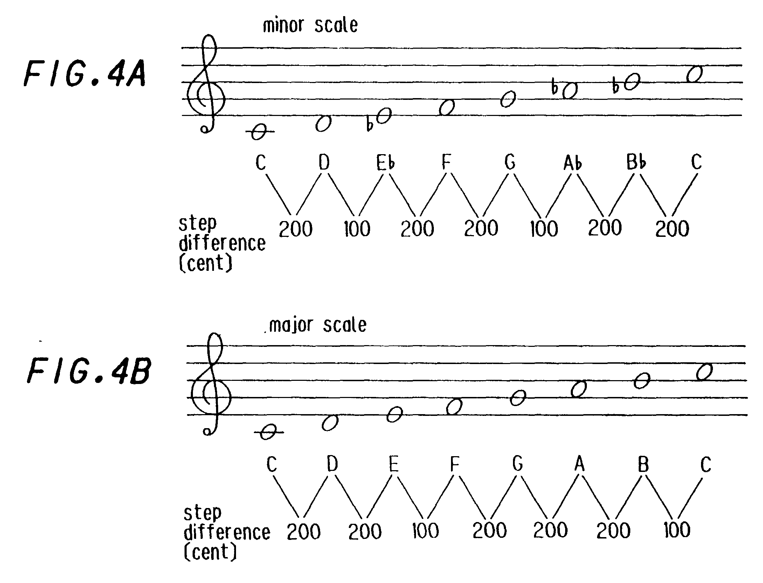

However, at this time, the musical interval difference (frequency ratio) of a musical interval three tones down from the vocal musical interval differs depending on the scale of the song. For example, in FIG. 4A a C-minor scale is shown but the musical interval 3 tones lower than Ab is F, with the musical interval difference being 300 cent. However, as shown in FIG. 4B, with a C-major scale the musical interval 3 tones lower than A is F# but the musical interval difference here is 400 cent. Also, in the C-minor scale in FIG. 4A, Eb is three tones lower than G, with the musical interval difference being 400 cent.

Further, let specific numeric values be considered. i.e.

fv: frequency of audio signal coming from microphone

$\Delta$f: correction value of the frequency due to the converting circuit 32

Now, for example, by making

$$fv = 437.4 \text{ Hz} \ (= Ab4 + 2.9\%)$$

and

$$\Delta f = +50 \text{ cent} \ (= +2.9\%)$$

the vocal frequency when $\Delta f = 0$ is:

$$fv - \Delta f = 427.4 \ (Hz) \times 2^{**} \ (-50/1200)$$

$$= 415.3 \ (Hz)$$

$$= Ab4$$

($x^{**}y$ is x to the power of y). F is present 3 tones below Ab, and in the case of C-minor, the musical interval difference can be seen to be 300 cent from FIG. 4.

Also, for example, by making

$$fv = 403.5 \text{ Hz} \ (= G4 + 2.9\%)$$

and

$$\Delta f = +50 \text{ cent} \ (= +2.9\%),$$

the vocal frequency when $\Delta f = 0$ is:

$$fv - \Delta f = 403.5 \ (Hz) \times 2^{**}(-50/1200)$$

$$= 392 \ (Hz)$$

$$= G4$$

Here, Eb is present 3 tones down from G, and at the time of a C-scale, it becomes clear from FIG. 4A that the musical interval difference is 400 cent.

So, in this embodiment of the present invention, a table showing the musical interval difference for each musical interval for every scale i.e. a musical interval difference table, is provided at the interval controller 67, as shown, for example, in FIGS. 4A and 4B. Also, data showing the scale of the karaoke musical accompaniment recorded in item number 19 (Fig. 3) is taken out from the data for the table SITi of the data for the first track TRK1 taken up by the system controller 66. This scale data is then supplied to the interval controller 67.

At the interval controller 67, musical interval difference tables for each of the scales of the kind shown in FIGS. 4A and 4B are selected by the scale data recorded at item number 19. Musical interval data is then formed for a musical interval 3 tones down with respect to the musical interval of the singers voice using this selected musical interval difference table.

Then, the audio signal from the microphone 41 converted into a digital signal by the A/D converter 43 is supplied to the musical interval transposer 46 and musical interval data is supplied from the interval controller 67 to the musical interval transposer 46. The audio signal from the microphone 41 is transposed to an audio signal for the musical interval transposer 46 for which the musical interval is 3 tones down, i.e. transposed to a harmony audio signal. This harmony audio signal is supplied to the mixer 44 and is mixed with the original audio signal i.e. the audio signal of the singers voice.

An audio signal is therefore outputted from the mixer 44 which is the audio signal from the microphone 41 with harmonies added. An audio signal relating to the singers voice with harmonies added with the karaoke musical accompaniment reproduced from the disc 1 as background is then outputted from the terminal 55.

According to the disc 1 and reproducing apparatus shown in FIG. 1, karaoke can be enjoyed. However, in this case, and in particular according to the aforementioned disc 1 and reproducing apparatus 10, harmonies can be automatically added to the singers vocals. As a result of this, during a song, and particularly in portions where the atmosphere comes to a climax and it is desired to sing, i.e. at a crescendo portion, harmonies can be added in an extremely effective manner. Harmonies can also be added in a manner which is in line with musical theory by using scale data included in the table SITi.

Also, in cases where harmonies are added to the vocals by preparedly mixing and recording a harmonizing audio signal with an audio signal relating to karaoke musical accompaniment, the harmony is constant. According to the. present invention, by attaching harmonies in accordance with a singers vocals in such a manner that, for example, the harmonies disappear if the vocals disappear and the harmonies go out of time if the singers voice goes out of time, a very effective karaoke apparatus for public use can be obtained.

Also, a key-change may occur midway, depending on the song. In doing so, the musical interval difference table is preparedly selected in accordance with the data for the scale recorded in item 19 (Fig. 3) of the table SITi, so the harmony structure will fall apart for this key-changed portion and become rather unpleasant.

(Second Embodiment)

As a result of this, the case described in the following for the second embodiment of this invention also corresponds with key changes in the middle of a song. The following description of the second embodiment describes portions which are distinct from the first embodiment. Other portions are constructed in the same way as for the first embodiment. In this second embodiment, the contents of, for example, item number 22 of item numbers 22 to 31 of the table SITi (Fig. 3) are made to be data showing a time position for the key change and the scale after the key change.

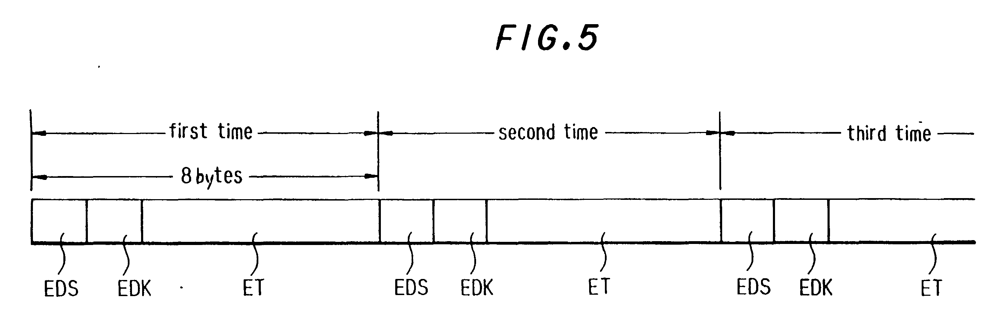

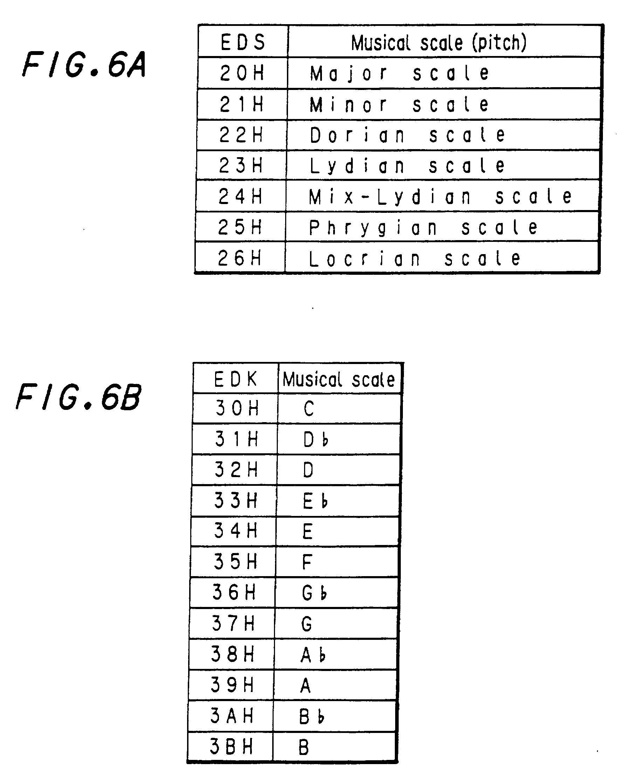

As shown in FIG. 5, an eight-byte area for a one-time key change is allotted to item number 22 of the table SITi. The first and second bytes of these bytes are, for example, for the data EDS and EDK showing the scale after a key change, as shown in FIGs 6A and 6B. For example, when EDS = 20H (H denotes hexadecimal form), it is shown that the scale after key change is major, and when EDS = 21, a minor scale is shown. Also, when EDK = 30H, it is shown that the scale after key change is C and when EDK = 31H, Db is shown.

Further, the third byte to the eighth byte are taken for data ET for displaying the minute, second and frame of the time of the key change. This minute, second and frame are written into an absolute address showing a reproducing position on the disc 1 i.e. written into the leading header portion of each sector of the disc 1. This key-change position is designated using absolute time data displaying the passage of time from the leading portion of this song.

When a key change is carried out three or more times, the aforementioned eight bytes of data EDS to ET are taken to be one group and the data contents corresponding to each key change are repeated.

This data EDS to ET is read out from the disc 1 when the disc 1 is installed in the reproducing apparatus 10 and is stored by the system controller 66. While the song is being reproduced, the key change time data ET from the data EDS to ET stored at the system controller 66 and the absolute time data played back from each sector of the disc 1 in real time are compared. When the absolute time position data ET and the absolute time data from the disc 1 both coincide, the scale data EDS and EDK for after the key change which has become a group with the key-change time position data ET which has coincided is transmitted to the interval controller 67.

The musical interval difference table for the interval controller 67 is selected using the transmitted scale data EDS and EDK. Musical interval data is then generated designating a musical interval which is 3 tones down from the musical interval of the singers vocals using this selected musical interval difference table. This musical interval data is supplied to the musical interval transposer 46 and a harmony signal of a musical interval which is three tones down from the musical interval of the vocal audio signal after the key change is generated.

Therefore, harmonizing of the correct chord structure can be achieved even if the key changes midway through a song.

In the above, processing such as correcting frequency characteristics and echo processing can be carried out independently for the harmony audio signal. Also, rather than just being used for key changes, the data EDS and EDK can also be used for allowing and prohibiting the forming of a harmony audio signal. In this case, harmonies may be assigned only to a specific part of a singers vocals.

In the above, a description has been given of the present invention applied to a disc such as a karaoke format video CD disc taken as a recording medium and it's reproducing apparatus. However, the present invention may also be applicable to, for example, with use of a usual music CD, an optical video disc or a karaoke system using communication network, as long as there is an audio signal for karaoke musical accompaniment and a medium having data displaying the karaoke scale.

**Claims**

1. A reproducing apparatus for a medium (1), the medium (1) having an audio signal related to musical accompaniment and data showing the scale of said musical accompaniment, said apparatus comprising:

   reproducing means (10) for reproducing from said medium (1) an audio signal relating to said musical accompaniment and the data showing the scale thereof,
   signal generating means (45, 67) for generating a harmony signal forming a chord suitable to an audio signal outputted from a microphone (41) based on said data showing the scale being reproduced by said reproducing means (10), and
   mixing means (44, 53-55) for mixing and outputting the audio signal outputted from the microphone (41), the audio signal reproduced by said reproducing means (10), and the harmony signal generated by said signal generating means (45, 67).

**2.** A reproducing apparatus for a medium according to claim 1, wherein said signal generating means (45, 67) comprises a musical interval difference table having data displaying a musical interval difference of each musical interval of every scale, and selects musical interval difference data from said musical interval difference table based on data (EDS, EDK) displaying the scale being reproduced by said reproducing means (10) so as to generate the harmony signal forming the chord with respect to the audio signal outputted from the microphone (41) using the selected musical interval difference data.

**3.** A reproducing apparatus for medium according to claim 2, wherein said signal generating means (45, 67) further comprises a musical interval transposing means (46), said signal generating means (45, 67) generates musical interval data based on the selected musical interval difference data, and said musical interval transposing means (46) transposes the audio signal outputted from the microphone (41) to the harmony signal forming the chord based on the generated musical interval data.

**4.** A reproducing apparatus for a medium (1) according to anyone of claims 1 to 3, said medium (1) further comprising character data relating to the musical accompaniment, data displaying a key change position and scale data relating to before and after said key change, wherein

said reproducing means (10) further reproduces said character data, said scale data, and said key change position data,
said signal generating means (45, 67) is further controlling the scale of the harmony signal being generated based on said scale data and said key change position data generated by said reproducing means (10).

**5.** A reproducing apparatus for a medium according to claim 4 when dependent on claim 2 or 3, wherein said signal generating means (45, 67) selects the musical interval difference data from said musical interval difference table so as to generate the harmony signal forming the chord using selected musical interval difference data, the harmony signal being a key-changed harmony signal based on said scale data reproduced by said reproducing means (10) after key-changing.

**6.** A reproducing apparatus for a medium according to claim 5, when dependent on claim 3, wherein said musical interval transposing means (46) transposes the audio signal outputted from the microphone (41) based on the generated musical interval data to a harmony signal forming a chord and key-changed based on scale data reproduced by said reproducing means (11) after a key change.

**7.** A reproducing apparatus for a recording medium (1), according to anyone of claims 4 to 6, the recording medium (1) further having data (EDS, EDK, ET) relating to a time passage relating to the audio signal relating to the musical accompaniment and further comprising control means (66) for detecting data displaying the time passage relating to the audio signal relating to the musical accompaniment recorded on the recording medium (1), controlling said signal generating means (45, 67) based on data showing said key-changed position reproduced by said reproducing means (10) and changing the key of the harmony signal based on scale data reproduced by said reproducing means (11) after a key-change.

**8.** A reproducing apparatus for a recording medium according to claim 7 when dependent on claim 6, wherein said reproducing apparatus (10) further comprises speed changing means (62) for changing a record medium playback speed and said musical interval transposing means (46) transposes an audio signal relating to the audio accompaniment reproduced by said reproducing means (11) at a playback speed changed by said speed changing means (62).

**Patentansprüche**

**1.** Wiedergabegerät für ein Medium (1), wobei das Medium (1) ein Audiosignal enthält, das eine musikalische Begleitung betrifft, sowie Daten, die die Tonleiter (Skala) dieser musikalischen Begleitung angeben, wobei das Gerät aufweist:

eine Wiedergabeeinrichtung (10) zum Reproduzieren des die musikalische Begleitung betreffenden Audiosignals und der Daten, die deren Skala angeben, von dem Medium,
eine Signalgeneratoreinrichtung (45, 67) zur Erzeugung eines Harmoniesignals, das auf der Basis der von der Wiedergabeeinrichtung (10) reproduzierten, die Skala angebenden Daten einen Akkord bildet, der an ein von einem Mikrophon (41) ausgegebenes Audiosignal angepaßt ist,
sowie eine Mischeinrichtung (44, 53-55) zum Mischen und zum Ausgeben des von dem Mikrophon (41) ausgegebenen Audiosignals, des von Wiedergabeeinrichtung (10) reproduzierten Audiosignals und des von der Signalgeneratoreinrichtung (45, 67) erzeugten Harmoniesignals.

**2.** Wiedergabegerät für ein Medium nach Anspruch 1, bei dem die Signalgeneratoreinrichtung (45, 67) eine Musikintervalldifferenz-Tabelle umfaßt mit Daten, die die Musikintervalldifferenz für jedes Musikintervall jeder Skala angeben, und bei dem die Signalgeneratoreinrichtung (45, 67) Musikintervalldifferenzdaten aus der Musikintervalldifferenz-Tabelle auf der Basis der mit Hilfe der genannten Wiedergabeeinrichtung (10) reproduzierten die Skala angebenden Daten (EDS, EDK) auswählt, um unter Verwendung der ausgewählten Musikintervalldifferenzdaten das Harmoniesignal zu erzeugen, das den Akkord für das von dem Mikrophon (41) ausgegebene Audiosignal bildet.

3. Wiedergabegerät für ein Medium nach Anspruch 2, bei dem die Signalgeneratoreinrichtung (45, 67) ferner eine Musikintervall-Transponiereinrichtung (46) umfaßt, die Signalgeneratoreinrichtung (45, 67) auf der Basis der ausgewählten Musikintervalldifferenzdaten Musikintervalldaten generiert und die Musikintervall-Transponiereinrichtung (46) auf der Basis der generierten Musikintervalldaten das von dem Mikrophon (41) ausgegebene Audiosignal in das Harmoniesignal transponiert, das den Akkord bildet.

4. Wiedergabegerät für ein Medium (1) nach einem der Ansprüche 1 bis 3, wobei das Medium (1) ferner Schriftzeichendaten enthält, die die musikalische Begleitung betreffen, ferner Daten, die die Position einer Tonartänderung angeben, sowie Skalendaten, die sich auf die Situation vor und der Tonartänderung beziehen, wobei

die Wiedergabeeinrichtung (10) ferner die Schriftzeichendaten, die Skalendaten und die Daten zur Position der Tonartänderung reproduziert und
die Signalgeneratoreinrichtung (45, 67) ferner die Skala des Harmoniesignals steuert, das auf der Basis der Skalendaten und der Daten zur Position der Tonartänderung generiert wird, die von der Wiedergabeeinrichtung (10) erzeugt werden.

5. Wiedergabegerät für ein Medium nach Anspruch 4, soweit von Anspruch 3 abhängig, bei dem die Signalgeneratoreinrichtung (45, 67) die Musikintervalldifferenzdaten aus der Musikintervalldifferenz-Tabelle so auswählt, daß das den Akkord bildende Harmoniesignal unter Verwendung ausgewählter Musikintervalldifferenzdaten erzeugt wird, wobei das Harmoniesignal ein Harmoniesignal ist, dessen Tonart auf der Basis der Skalendaten verändert ist, die von der Wiedergabeeinrichtung (10) nach der Tonartänderung reproduziert werden.

6. Wiedergabegerät für ein Medium nach Anspruch 5, soweit von Anspruch 3 abhängig, bei dem die Musikintervall-Transponiereinrichtung (46) das von dem Mikrophon (41) ausgegebene Audiosignal auf der Basis der generierten Musikintervalldaten in ein Harmoniesignal transponiert, das einen Akkord bildet, dessen Tonart auf der Basis der Skalendaten verändert ist, die von der Wiedergabeeinrichtung (11) nach einer Tonartänderung reproduziert werden.

7. Wiedergabegerät für ein Medium (1) nach einem der Ansprüche 4 bis 6, bei dem das Aufzeichnungsmedium (1) ferner Daten (EDS, EDK, ET) enthält, die eine Zeitpassage betreffen, die auf das die musikalische Begleitung betreffende Audiosignal bezogen ist, wobei ferner eine Steuereinrichtung (66) zum Detektieren von Daten vorgesehen ist, die die Zeitpassage angeben, die sich auf das auf dem Aufzeichnungsmedium (1) aufgezeichnete, die musikalische Begleitung betreffende Audiosignal bezieht, ferner zur Steuerung der Signalgeneratoreinrichtung (45, 67) auf der Basis von Daten, die die von der Wiedergabeeinrichtung (10) reproduzierte Position der Tonartänderung angeben, und zur Änderung der Tonart des Harmoniesignals auf der Basis von Skalendaten, die von der Wiedergabeeinrichtung (10) nach einer Tonartänderung reproduziert werden.

8. Wiedergabegerät für ein Medium nach Anspruch 7, soweit von Anspruch 6 abhängig, bei dem die Wiedergabeeinrichtung (10) ferner eine Geschwindigkeitsänderungseinrichtung (62) zur Änderung der Abspielgeschwindigkeit eines Aufzeichnungsmediums aufweist und die Musikintervall-Transponiereinrichtung (46) das die musikalische Begleitung betreffende Audiosignal transponiert, das von der Wiedergabeeinrichtung (11) in einer von der Geschwindigkeitsänderungseinrichtung (62) geänderten Abspielgeschwindigkeit reproduziert wird.

**Revendications**

1. Appareil de reproduction pour un support (1), le support (1) comportant un signal audio concernant un accompagnement musical et des données présentant la gamme dudit accompagnement musical, ledit appareil comprenant :

des moyens de reproduction (10) pour reproduire, à partir dudit support (1), un signal audio concernant ledit accompagnement musical et les données présentant la gamme de celui-ci, des moyens de génération de signal (45, 67) pour générer un signal d'harmonie formant un chant approprié à un signal audio délivré par un microphone (41) sur la base desdites données présentant la gamme reproduite par lesdits moyens de reproduction (10), et

des moyens de mélange (44, 53 à 55) pour mélanger et sortir le signal audio délivré par le microphone (41), le signal audio reproduit par lesdits moyens de reproduction (10) et le signal d'harmonie généré par lesdits moyens de génération de signal (45, 67).

2. Appareil de reproduction pour un support selon la revendication 1, dans lequel lesdits moyens de génération de signal (45, 67) comprennent une table de différence d'intervalle musical comportant des données affichant une différence d'intervalle musical de chaque intervalle musical de chaque gamme et sélectionnent des données d'intervalle musical dans ladite table de différence d'intervalle musical en se basant sur les données (EDS, EDK) affichant la gamme reproduite par lesdits moyens de reproduction (10) de manière à générer le signal d'harmonie formant le chant par rapport au signal audio délivré par le microphone (41) en utilisant les données de différence d'intervalle musical sélectionnées.

3. Appareil de reproduction pour un support selon la revendication 2, dans lequel lesdits moyens de génération de signal (45, 67) comprennent, de plus, des moyens de transposition d'intervalle musical (46), lesdits moyens de génération de signal (45, 67) génèrent des données d'intervalle musical sur la base des données de différence d'intervalle musical sélectionnées, et lesdits moyens de transposition d'intervalle musical (46) transposent le signal audio délivré par le microphone (41) en le signal d'harmonie formant le chant sur la base des données d'intervalle musical générées.

4. Appareil de reproduction pour un support (1) selon l'une quelconque des revendications 1 à 3, ledit support (1) comprenant, de plus, des données de caractère associées à l'accompagnement musical, des données affichant une position de changement de ton et des données de gamme concernant la partie du chant avant et après ledit changement de ton, dans lequel :

lesdits moyens de reproduction (10) reproduisent, de plus, lesdites données de caractère, lesdites données de gamme et lesdites données de position de changement de ton,
lesdits moyens de génération de signal (45, 67) contrôlent, de plus, la gamme du signal d'harmonie généré sur la base desdites données de gamme et desdites données de position de changement de ton générées par lesdits moyens de reproduction (10).

5. Appareil de reproduction pour un support selon la revendication 4 lorsqu'elle dépend de la revendication 2 ou 3, dans lequel lesdits moyens de génération de signal (45, 67) sélectionnent les données de différence d'intervalle musical dans ladite table de différence d'intervalle musical de manière à générer le signal d'harmonie formant le chant en utilisant les données de différence d'intervalle musical sélectionnées, le signal d'harmonie étant un signal d'harmonie à changement de ton basé sur lesdites données de gamme reproduites par lesdits moyens de reproduction (10) après le changement de ton.

6. Appareil de reproduction pour un support selon la revendication 5, lorsqu'elle dépend de la revendication 3, dans lequel lesdits moyens de transposition d'intervalle musical (46) transposent le signal audio délivré par le microphone (41) sur la base des données d'intervalle musical générées en un signal d'harmonie formant un chant et à ton modifié sur la base des données de gamme reproduites par lesdits moyens de reproduction (11) après un changement de ton.

7. Appareil de reproduction pour un support d'enregistrement (1), selon l'une quelconque des revendications 4 à 6, le support d'enregistrement (1) comportant, de plus, des données (EDS, EDK, ET) concernant un écoulement du temps concernant le signal audio concernant l'accompagnement musical et comprenant, de plus, des moyens de contrôle (66) pour détecter des données affichant l'écoulement du temps concernant le signal audio concernant l'accompagnement musical enregistré sur le support d'enregistrement (1), contrôlant lesdits moyens de génération de signal (45, 67) sur la base des données présentant ladite position de changement de ton reproduites par lesdits moyens de reproduction (10) et changeant le ton du signal d'harmonie sur la base des données de gamme reproduites par lesdits moyens de reproduction (11) après un changement de ton.

8. Appareil de reproduction pour un support d'enregistrement selon la revendication 7 lorsqu'elle dépend de la revendication 6, dans lequel ledit appareil de reproduction (10) comprend, de plus, des moyens de modification de vitesse (62) pour modifier une vitesse de reproduction de support d'enregistrement et lesdits moyens de transposition d'intervalle musical (46) transposent un signal audio concernant l'accompagnement musical reproduit par lesdits moyens de reproduction (11) à une vitesse de reproduction modifiée par lesdits moyens de modification de vitesse (62).

FIG.1

EP 0 676 741 B1

EP 0 676 741 B1

lead-in track   track 1   track 2   track N   lead-out track

**FIG.2A**

| | TRK1 | TRK2 | TRK3 | - - - - - - - | TRKN | |

**FIG.2B**

| SIT1 | SIT2 | - - - - - - - | SIT(N-1) |

table

# FIG.3

| | item number | contents |
|---|---|---|
| — | 0 ~ 7 | (disk item) |
| required | 8 | song ISRC code |
| required | 9 | song title |
| optional | 1 0 | song title (for changing line-up) |
| required | 1 1 | performers name |
| optional | 1 2 | performers name (for changing line-up) |
| required | 1 3 | songwriters name |
| required | 1 4 | composers name |
| optional | 1 5 | arrangers name |
| optional | 1 6 | original performers name |
| optional | 1 7 | lyrics header |
| optional | 1 8 | lyrics |
| optional | 1 9 | karaoke scale (step) |
| optional | 2 0 | original song scale |
| optional | 2 1 | details of song contents |
| optional | 2 2 ~ 3 1 | maker proposal clause |
| optional | 3 2 ~ 6 4 | reserve area |

SITi sequence item table

11

FIG. 4A

minor scale

step difference (cent)

| C | D | Eb | F | G | Ab | Bb | C |
|---|---|----|---|---|----|----|---|
| | 200 | 100 | 200 | 200 | 100 | 200 | 200 |

FIG. 4B

major scale

step difference (cent)

| C | D | E | F | G | A | B | C |
|---|---|---|---|---|---|---|---|
| | 200 | 200 | 100 | 200 | 200 | 200 | 100 |

# FIG.5

EP 0 676 741 B1

**FIG.6A**

| EDS | Musical scale (pitch) |
|-----|------------------------|
| 20H | Major scale |
| 21H | Minor scale |
| 22H | Dorian scale |
| 23H | Lydian scale |
| 24H | Mix-Lydian scale |
| 25H | Phrygian scale |
| 26H | Locrian scale |

**FIG.6B**

| EDK | Musical scale |
|-----|---------------|
| 30H | C |
| 31H | D♭ |
| 32H | D |
| 33H | E♭ |
| 34H | E |
| 35H | F |
| 36H | G♭ |
| 37H | G |
| 38H | A♭ |
| 39H | A |
| 3AH | B♭ |
| 3BH | B |